# EUROPEAN PATENT APPLICATION

(11) **EP 4 717 068 A1**
(43) Date of publication of application: **01.04.2026**
(21) Application number: 25204195.9
(22) Date of filing: 24.09.2025
(51) Int. Cl.: A01D 34/82, B62D 11/00, B62D 51/04

(54) **WORKING MACHINE**

(30) Priority: 27.09.2024 JP 2024168202
(71) Applicant: Yamabiko Corporation, Ohme-shi, Tokyo 198-8760 (JP)
(72) Inventor: KONO, Toru, Tokyo, 1988760 (JP); NAKANO, Kenji, Tokyo, 1988760 (JP)
(74) Representative: Winter, Brandl - Partnerschaft mbB

(57) **Abstract**

According to an aspect of the present disclosure, there is provided a working machine including: a main body including an angle sensor and an operation controller and configured to travel on a basis of rotational power of a motor; and an operation unit connected to the main body and including an operation rod, a gripping portion, and a controller, the operation rod being connected to the main body, the gripping portion being connected to the operation rod and being configured to be gripped to assist the travel of the main body, the controller being arranged in the gripping portion and being configured to accept an input operation for a travel direction of the main body, the angle sensor being configured to detect a relative angle between the main body and the operation rod, and the operation controller being configured to control the travel direction of the main body so as to align the input travel direction with the relative angle.

## Description

### BACKGROUND

The present disclosure relates to a working machine.

### RELATED ART

JP H11-129929 A discloses a straight travel control structure of a working machine.

The straight travel control structure of this working machine is provided with a tilt angle detection sensor that detects a tilt direction and a tilt angle in the left and right direction of the machine body, and a travel control means that controls the drive speed of left and right traveling devices so that the drive speed of the traveling device positioned on the valley side is faster than the drive speed of the traveling device positioned on the mountain side as the tilt angle becomes larger based on detection from the tilt angle detection sensor.

### SUMMARY

### Problems to be Solved by Invention

When operating a working machine using a controller, it was necessary to operate both a lever for straight travel operation and a lever for turning operation. Thus, it was difficult for an operator who is not familiar with operating a work machine to freely operate the above two types of levers.

In view of the above circumstances, the present disclosure provides a working machine or the like that can be intuitively operated using a controller.

### Means for Solving Problems

According to one aspect of the present disclosure, there is provided a working machine, including: a main body including an angle sensor and an operation controller and configured to travel on a basis of rotational power of a motor; and an operation unit connected to the main body and including an operation rod, a gripping portion, and a controller, the operation rod being connected to the main body, the gripping portion being connected to the operation rod and being configured to be gripped to assist the travel of the main body, the controller being arranged in the gripping portion and being configured to accept an input operation for a travel direction of the main body, the angle sensor being configured to detect a relative angle between the main body and the operation rod, and the operation controller being configured to control the travel direction of the main body so as to align the input travel direction with the relative angle.

According to such an aspect, it is possible to provide a working machine or the like that can be intuitively operated using a controller.

### BRIEF DESCRIPTION OF DRAWINGS

FIG. 1 shows an example of an overall configuration of a grass mower 11.
FIG. 2 is a perspective view showing an appearance of the grass mower 11.
FIG. 3 is a front view showing an appearance of the grass mower 11.
FIG. 4 is a left side view showing an appearance of the grass mower 11.
FIG. 5 is a rear view showing an appearance of the grass mower 11.
FIG. 6 is a top view showing an appearance of the grass mower 11.
FIG. 7 is a bottom view showing the grass mower 11 with some components omitted.
FIG. 8 is a perspective view showing the grass mower 11 with some components omitted.
FIG. 9 is a top view showing the grass mower 11 with some components omitted.
FIG. 10 shows an example of an arrangement of each component near an attachment portion 200.
FIG. 11A and FIG. 11B show an arrangement of each lever of a controller 5.
FIG. 12 is an activity diagram showing a flow of controlling the travel of the grass mower 11.
FIG. 13A to FIG. 13C are conceptual diagrams each showing a case of controlling the travel direction of the grass mower 11.
FIG. 14A to FIG. 14C are diagrams for explaining a case in which a deviation occurs in the travel direction of the main body 2 while the grass mower 11 is traveling.

### DETAILED DESCRIPTION

Hereinafter, an embodiment of the present disclosure will be described with reference to the drawings. Various features described in the embodiment below can be combined with each other.

A program for implementing the software described in an embodiment may be provided as a non-transitory computer-readable medium, may be made available for download via an external server, or may be provided in such a manner that the program can be executed on an external computer to realize functions thereof on a client terminal (so-called cloud computing).

In addition, in various types of information processing according to an embodiment, an input and an output in response to the input can be realized. Here, if an output is obtained as a result of an input, the form of information referenced in such information processing (hereinafter referred to as reference information) is not limited. The reference information may be, for example, rule-based information such as a database, a lookup table, or a predefined function (including decision formulas such as regression equations constructed using statistical methods), a pretrained model that has learned the correlations between inputs and outputs, or a large language model that can output a desired result in response to a prompt.

The term "unit" in an embodiment may include, for example, a combination of hardware resources implemented by circuits in a broad sense and information processing of software that can be specifically realized using those hardware resources. Furthermore, various types of information are handled in one embodiment. Such information can be represented, for instance, by physical values of signal values indicating voltage or current, by high and low levels of signal values as a set of binary bits consisting of Os and 1s, or by quantum superposition (so-called qubits), and communication and computation can be performed on a circuit in a broad sense.

Furthermore, the term "the circuit in a broad sense" is a circuit realized by appropriately combining at least a circuit, circuitry, a processor, a memory, or the like. The processor may be a general-purpose processor or a dedicated circuit. In other words, the term "circuit in a broad sense" may include an application specific integrated circuit (ASIC), a programmable logic device (e.g., simple programmable logic device (SPLD), a complex programmable logic device (CPLD), field programmable gate array (FPGA)), and the like.

### 1. Overall configuration

Chapter 1 describes a working machine 1 according to one embodiment. The working machine 1 is configured to travel in order to perform predetermined work. The following explanation focuses on the case where the working machine 1 is the grass mower 11.

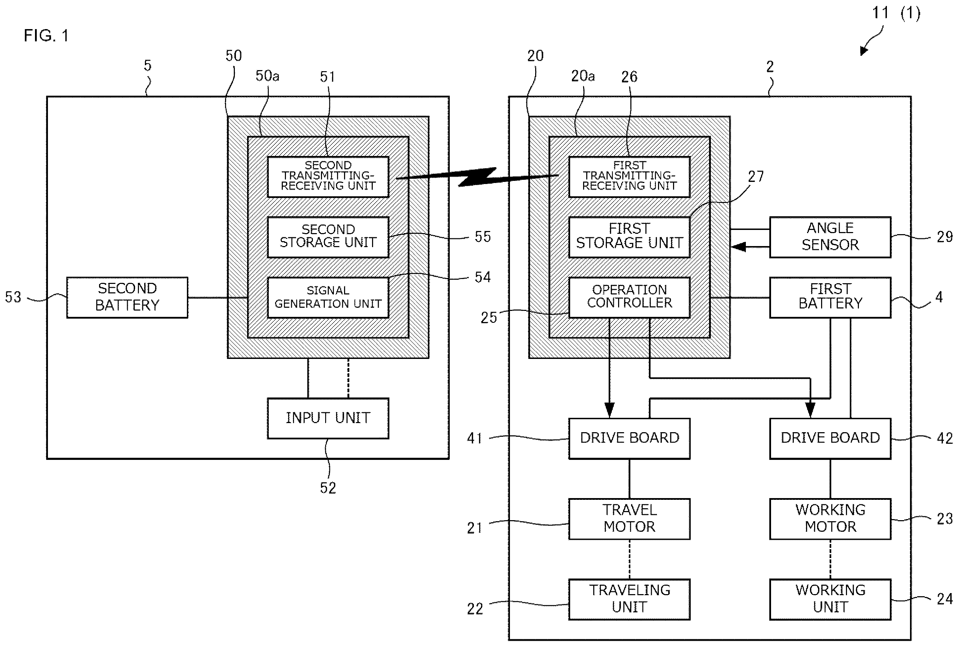

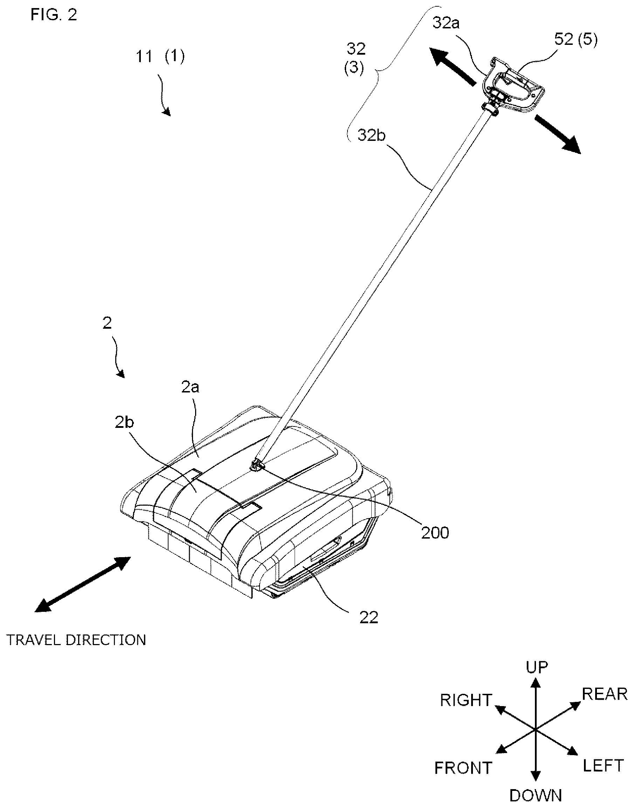

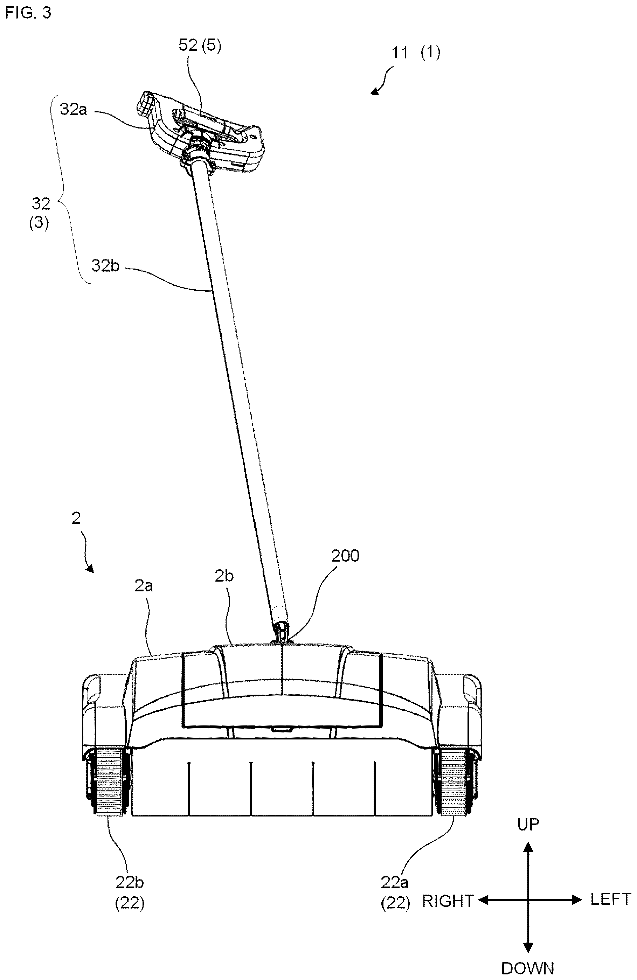

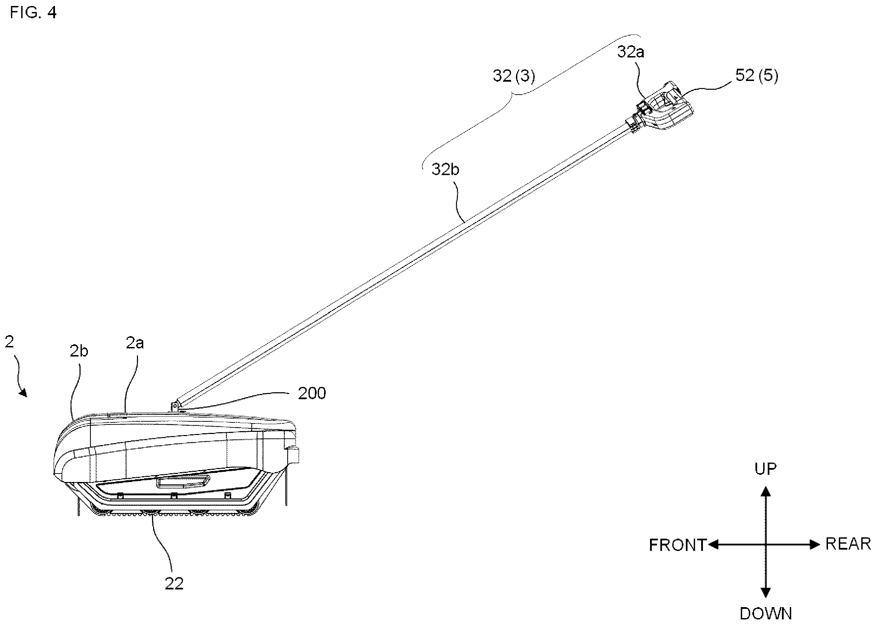

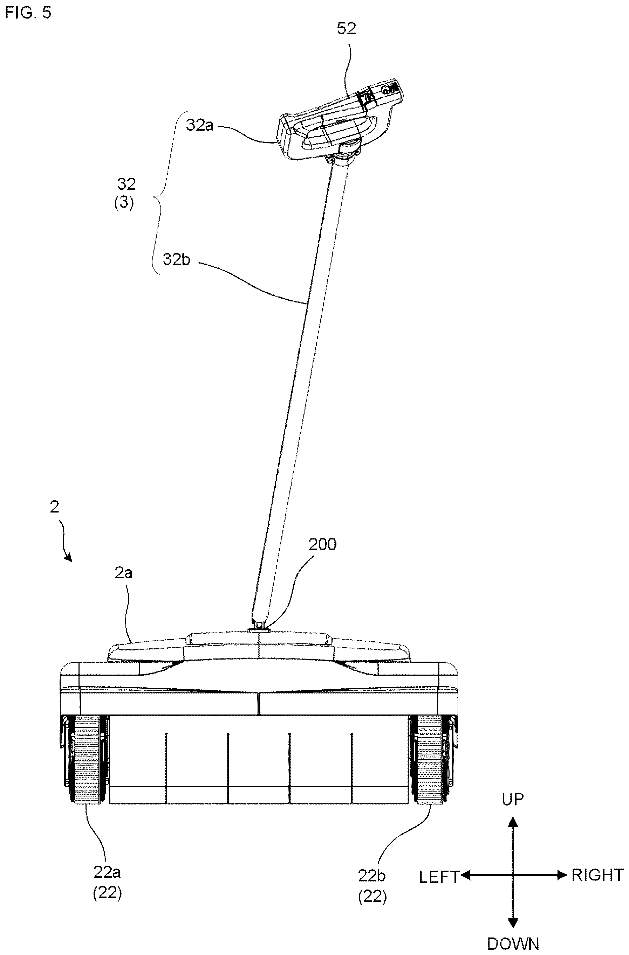

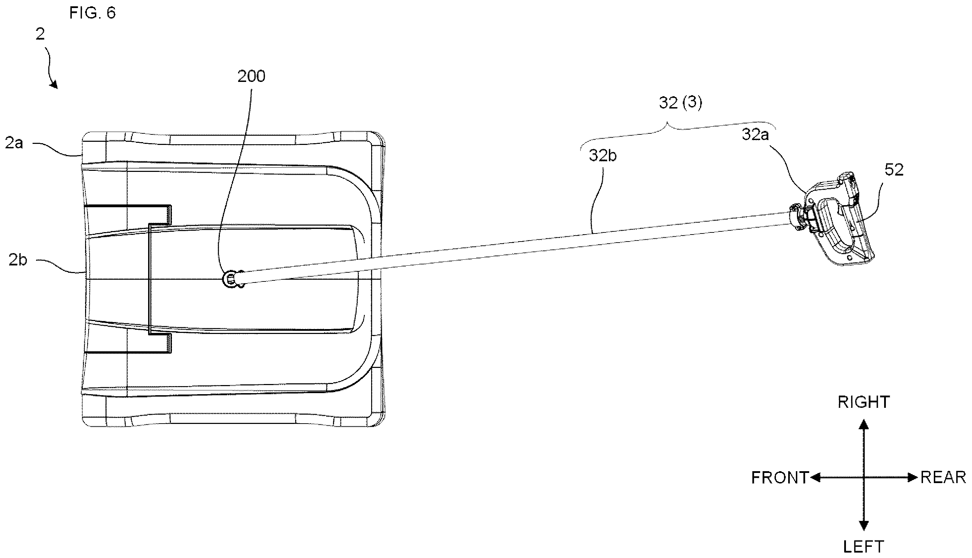

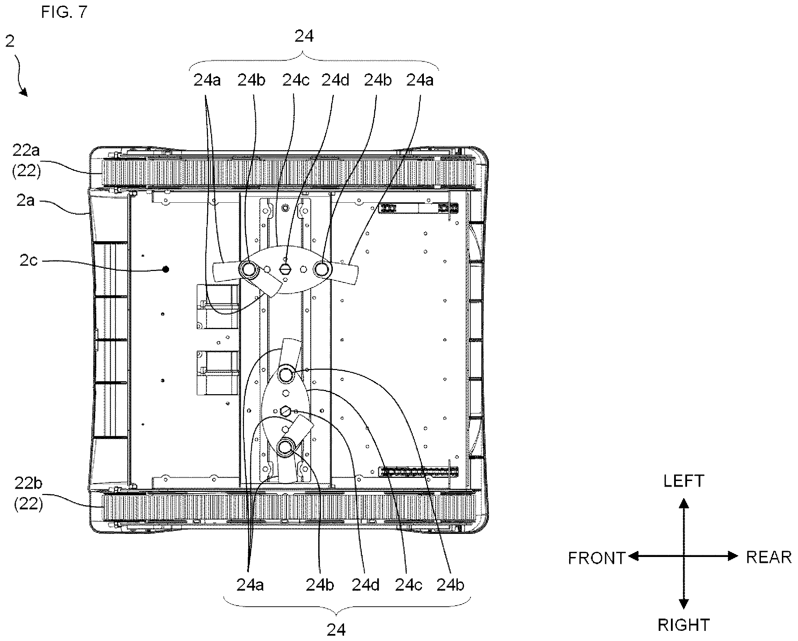

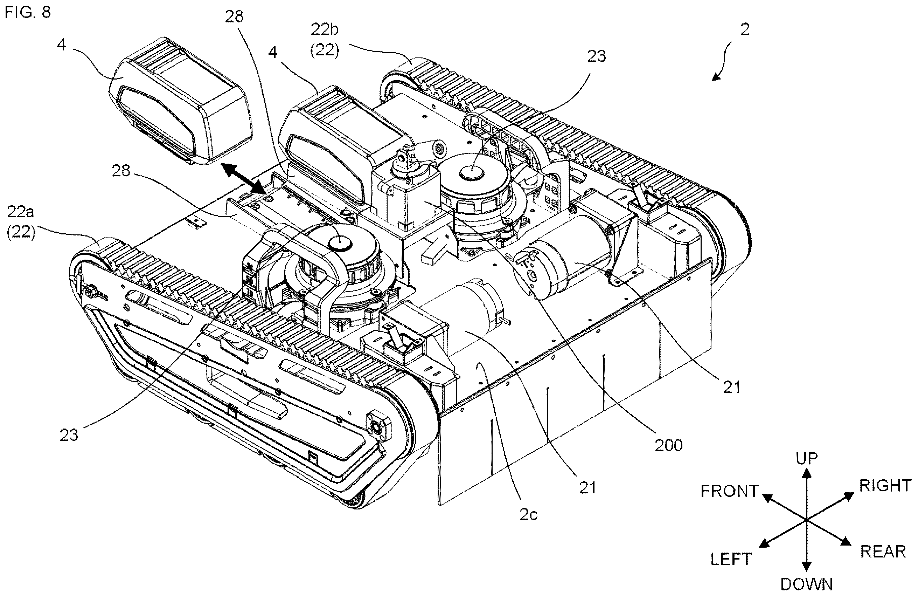

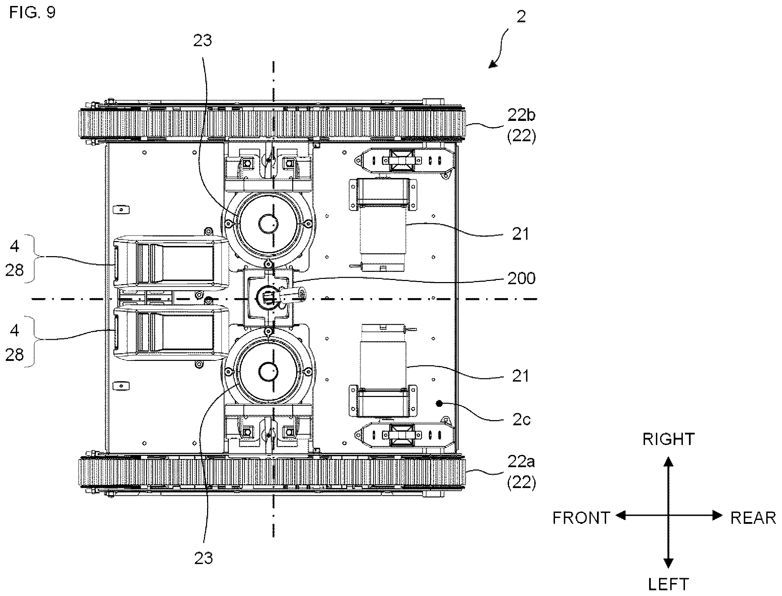

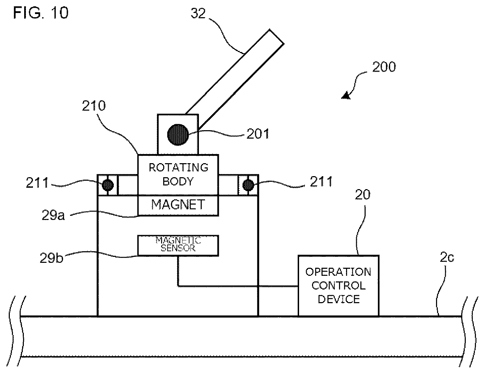

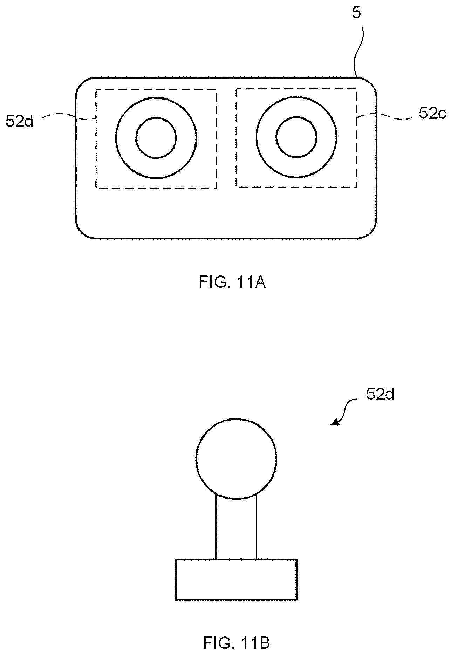

FIG. 1 shows an example of the overall configuration of the grass mower 11. FIG. 2 is a perspective view showing an appearance of the grass mower 11. FIG. 3 is a front view showing an appearance of the grass mower 11. FIG. 4 is a left side view showing an appearance of the grass mower 11. FIG. 5 is a rear view showing an appearance of the grass mower 11. FIG. 6 is a top view showing an appearance of the grass mower 11. FIG. 7 is a bottom view showing the grass mower 11 with some components omitted. FIG. 8 is a perspective view showing the grass mower 11 with some components omitted. FIG. 9 is a top view showing the grass mower 11 with some components omitted. FIG. 10 shows an example of an arrangement of each component near an attachment portion 200. FIG. 11A and FIG. 11B show an arrangement of each lever of a controller 5.

In the following description, directions of the grass mower 11 and each component constituting the grass mower 11 are defined based on "up", "down", "left", "right", "front" and "rear" shown in FIG. 2 to FIG. 14. Furthermore, in the following description, "up" is also referred to as an "upper side" or "upper", and "down" is also referred to as a "lower side" or "lower". Moreover, the direction formed by "up" and "down" is referred to as the "up-down" or "up-down direction. The same applies to "left", "right", "front" and "rear".

### (Grass mower 11)

As shown in FIG. 1 and FIG. 2, the grass mower 11 that is the working machine 1 includes a main body 2, an operation unit 3 including a controller 5 and an operation rod 32, an angle sensor 29 provided in the main body 2, an attachment portion 200, an operation control device 20, and a first battery 4 that is attachable to and detachable from the main body 2. The grass mower 11 has a travel function and a working function and performs mowing work while traveling.

### (Main body 2)

As shown in FIG. 1 and FIG. 8, the main body 2 includes travel motors 21, an attachment portion 200, traveling units 22, working motors 23, working units 24, an operation control device 20, and mounting portions 28. The operation control device 20 includes a first integrated circuit 20a, and furthermore, the first integrated circuit 20a includes a first transmitting-receiving unit 26, a first storage unit 27, and an operation controller 25.

As shown in FIG. 2 and FIG. 8, the main body 2 includes an upper cover 2a and a lower support plate 2c. As shown in FIG. 2 to FIG. 6, the upper cover 2a has a lid-like shape and is provided so as to cover, from above, at least part of the components mounted on the lower support plate 2c. As shown in FIG. 2 and FIG. 6, the upper cover 2a includes an opening/closing portion 2b that can be opened and closed. By opening the opening/closing portion 2b, it is possible to check or operate each component constituting the main body 2, which is covered by the upper cover 2a. In other words, the opening/closing portion 2b makes it possible to check or operate each component without removing the upper cover 2a from the grass mower 11. The lower support plate 2c has a plate shape and is arranged below the upper cover 2a. Various components constituting the main body 2, that is, the travel motors 21, the traveling units 22, the working motors 23, the working units 24, the operation control device 20, and the mounting portions 28, are mechanically connected to the lower support plate 2c.

The travel motor 21 is an electric motor and is configured to generate rotational power for causing travel of the main body 2. Specifically, as shown in FIG. 8, in the grass mower 11, a total of two travel motors 21 are arranged, one on each of the left and right sides, at the rear side of the upper surface of the lower support plate 2c. The travel motors 21 are mechanically connected to the traveling units 22 directly or via a chain, a gear, etc. (not shown).

The traveling units 22 are supplied with rotational power from the travel motors 21 to cause the grass mower 11 to travel. In other words, the main body 2 is configured to travel on the basis of the rotational power of the travel motors 21. As shown in FIG. 3 to FIG. 5, each of the traveling units 22 is a continuous track, also known as a "caterpillar" (Caterpillar is a registered trademark) in the grass mower 11. It should be noted that each traveling unit 22 is not limited to a continuous track, but may be, for example, a tire or the like. In Chapter 2, the traveling units 22 may be described separately as a left traveling unit 22a and a right traveling unit 22b.

The working motor 23 is an electric motor and is configured to generate rotational power for performing mowing work. Specifically, as shown in FIG. 8, in the grass mower 11, a total of two working motors 23 are arranged, one on each of the left and right sides, substantially at the center of the upper surface of the lower support plate 2c in the front-rear direction. Each of the working motors 23 is mechanically connected to each of the working units 24 directly or via a chain, a gear, etc. (not shown).

The working units 24 are supplied with rotational power from the working motors 23 to perform predetermined work. As shown in FIG. 7, in the grass mower 11, each of the working units 24 is configured to mow vegetation such as grass by rotating, with the rotation driven by the rotational power of the working motors 23. Specifically, each of the working units 24 is of a free knife type including cutting blades 24a, cutting blade shafts 24b, a cutting blade attachment portion 24c, and a rotary shaft 24d. In detail, each of the cutting blades 24a is plate-shaped and rotates about the rotary shaft 24d via the cutting blade attachment portion 24c while the grass mower 11 is traveling, thereby mowing grass and the like that comes into contact with the cutting blades 24a. The cutting blade attachment portion 24c has an elliptical shape, and has the rotary shaft 24d connected thereto substantially at the center. Also, the cutting blade attachment portion 24c rotates in a plane defined by the front-rear and left-right directions. The cutting blade attachment portion 24c includes cutting blade shafts 24b at both longitudinal ends. Also, the cutting blades 24a are connected to both the upper and lower sides of each cutting blade shaft 24b. Furthermore, each of the cutting blades 24a is attached to each of the cutting blade shafts 24b of the cutting blade attachment portion 24c so as to rotate within a predetermined range around each cutting blade shaft 24b. The working unit 24 is not limited to the free-knife type, and a resin cord such as a nylon cord, a metal blade (a reel blade, a tipped saw, a shredder blade, etc.), a resin blade, a reciprocating blade, or the like may also be adopted as the working unit 24.

As shown in FIG. 1, the energization from the first battery 4 to the travel motor 21 and the working motor 23 is controlled by the operation controller 25. In other words, the operation controller 25 is electrically connected to a drive board 41 and a drive board 42 via a signal line. The drive board 41 is electrically connected to the travel motor 21 and the first battery 4 via a power line. The drive board 42 is electrically connected to the working motor 23 and the first battery 4 via a power line. The operation controller 25 controls the energization from the first battery 4 to the travel motor 21 and the working motor 23 by transmitting a driving signal to the drive boards 41 and 42. In this manner, the operation controller 25 is configured to electrically control the rotation of each travel motor 21 and each work motor 23. In addition, the operation controller 25 and the first transmitting-receiving unit 26 are mounted on the first integrated circuit 20a and are electrically connected by a signal line or the like. The first transmitting-receiving unit 26 has a wireless communication function and performs wireless communication with the controller 5. In the following descriptions, the "signal line" and the "power line" will be referred to as a "wiring harness" as appropriate.

As shown in FIG. 8, each of the mounting portions 28 is plate-shaped and configured to allow each first battery 4, which is used to supply power to each travel motor 21, to be detachably attached. Each of the mounting portions 28 is arranged at the front side of the upper surface of the lower support plate 2c, close to substantially the center in the left-right direction. Each of the mounting portions 28 is tilted so as to approach the lower support plate 2c as it goes from the front toward the rear.

As shown in FIG. 8 to FIG. 10, the attachment portion 200 has a box shape and is arranged substantially at the center of the upper surface of the lower support plate 2c of the main body 2. Furthermore, the attachment portion 200 includes a rotating body 210 and is attached to the main body 2 via bearings 211 so as to be rotatable in a predetermined direction. In the attachment portion 200, a connecting portion 201 fixes the operation rod 32 and connects the main body 2 and the operation rod 32.

As shown in FIG. 1, the angle sensor 29 is electrically connected to the operation control device 20 via a wiring harness and is actuated by the power of the first battery 4 that is converted into operating power by the operation control device 20. The angle sensor 29 transmits a detected angle signal (relative angle) to the operation controller 25 at a predetermined cycle. Furthermore, as shown in FIG. 10, the angle sensor 29 is configured by a magnet 29a provided on the rotating body 210 and a magnetic sensor 29b provided near or directly below the magnet 29a, and detects the angle by detecting the magnetism of the magnet 29a. In other words, the angle sensor 29 is arranged at a connection portion (attachment portion 200) between the main body 2 and the operation rod 32. Thus, when the operator moves the operation rod 32 in a predetermined direction relative to the main body 2, the angle sensor 29 can detect the rotational position of the rotating body 210. According to such an aspect, the relative angle between the main body 2 and the operator holding the operation rod 32 can be detected more easily.

The connection portion (attachment portion 200) between the main body 2 and the operation rod 32 is provided at the center of the turning position of the main body 2. According to such an aspect, the operation rod 32 will not move in the predetermined (left-right) direction when the main body 2 performs a turning movement. In the case where the connection portion (attachment portion 200) is offset from the center of the turning position of the main body 2, the control becomes complicated because the turning movement has to be controlled taking the offset into account. However, in the case where the connection portion (attachment portion 200) is provided at the center of the turning position of the main body 2, it is possible to control the turning movement without taking the offset into account.

The angle sensor 29 detects the rotation angle of the rotating body 210, converts the amount of this rotation angle into an electrical signal, and transmits this electrical signal to the operation controller 25. The operation controller 25 then controls the travel of the main body 2, i.e., the grass mower 11, based on the deviation between the rotation angle of the rotating body 210 and the relative angle between the main body 2 and the operation rod 32. In other words, the angle sensor 29 is configured to detect the relative angle between the main body 2 and the operator holding the operation rod 32 by detecting the rotation angle of the rotating body 210.

### (Operation unit 3)

As shown in FIG. 2, the operation unit 3 includes the controller 5 and the operation rod 32. The operation rod 32 is connected to the main body 2 via the attachment portion 200. The gripping portion 32a is connected to the operation rod 32 and is configured to be gripped to assist the travel of the main body 2.

As shown in FIG. 2, the main body 2 is connected to the operation rod 32 via the attachment portion 200. The operation rod 32 includes a gripping portion 32a and a connecting portion 32b. The gripping portion 32a is integrated with the controller 5 to form an annular shape, and is gripped by the operator inserting his or her hand into the inside of the annular opening. In FIG. 2, the connecting portion 32b is connected to the lower side of the gripping portion 32a. The connecting portion 32b is pipe-shaped and connects the attachment portion 200 and the gripping portion 32a. In other words, the operation rod 32 is connected to the main body 2 via the attachment portion 200 and is configured to be gripped to assist the travel of the main body 2.

### (First battery 4)

As shown in FIG. 8, each of the first batteries 4 is detachably attached to each of the mounting portions 28 of the main body 2 at the front side of the main body 2. Each first battery 4 is configured by housing a secondary battery, such as a lithium-ion battery, in a rectangular case. Each first battery 4 is a battery pack that can be attached to and detached from the mounting portion 28 by sliding the first battery 4 in the front-rear direction. In the grass mower 11, two first batteries 4 are mounted, but this is not limited thereto. The grass mower 11 may be provided with one or three or more mounting portions 28, and the first battery 4 may be mounted on each of the mounting portions 28.

### (Controller 5)

As shown in FIG. 1, the controller 5 includes a control device 50, a second battery 53, a second integrated circuit 50a, and an input unit 52. The second integrated circuit 50a includes a signal generation unit 54, a second storage unit 55, and a second transmitting-receiving unit 51. The second integrated circuit 50a operates by being supplied with power from the second battery 53. The second integrated circuit 50a and the input unit 52 are electrically connected via a wiring harness. As shown in FIG. 2, the controller 5 is arranged in the gripping portion 32a and is integrally configured with the gripping portion 32a of the operation unit 3. The controller 5 is a controller having a wireless communication function, and is configured to operate the main body 2 via wireless communication with the main body 2 based on an operation by an operator. The controller 5 is configured to accept an input operation for the travel direction of the main body 2. The controller 5 may be configured to be detachable from the operation rod 32 of the operation unit 3.

The second transmitting-receiving unit 51 transmits an input signal of the input unit 52, which has been converted into an electrical signal by the signal generation unit 54, to the first transmitting-receiving unit 26 via wireless communication. In other words, the first transmitting-receiving unit 26 receives the input signal of the input unit 52 from the second transmitting-receiving unit 51 via wireless communication. The operation controller 25 executes control in response to the signal received by the first transmitting-receiving unit 26.

As shown in FIG. 6, the input unit 52 includes an operation lever 52d and a cutting blade operation lever 52c, which will be described later. In addition, the cutting blade operation lever 52c is a means of operation for switching on and off to rotate the working unit 24.

FIG. 11A is a front view of the controller 5, and FIG. 11B is a side view of the operation lever 52d. The operation lever 52d is a lever for operating the travel direction of the main body 2 by being tilted in any direction within 360 degrees. In addition, as described below, the travel speed of the main body 2 can be controlled in accordance with the input operation (tilt angle, tilt time, or the like) to the operation lever 52d.

As shown in FIG. 1, the first storage unit 27 is electrically connected to the operation controller 25. The first storage unit 27 stores various types of information necessary to control the grass mower 11. The first storage unit 27 may be implemented, for example, as a memory such as a random access memory (RAM), which temporarily stores information (e.g., arguments, arrays) necessary for executing various programs related to the grass mower 11 by the operation controller 25, or as a storage device such as a solid state drive (SSD). Furthermore, a combination thereof may be applied.

### 2. Control method

Chapter 2 describes a method for controlling the travel direction of the working machine 1 in the present embodiment.

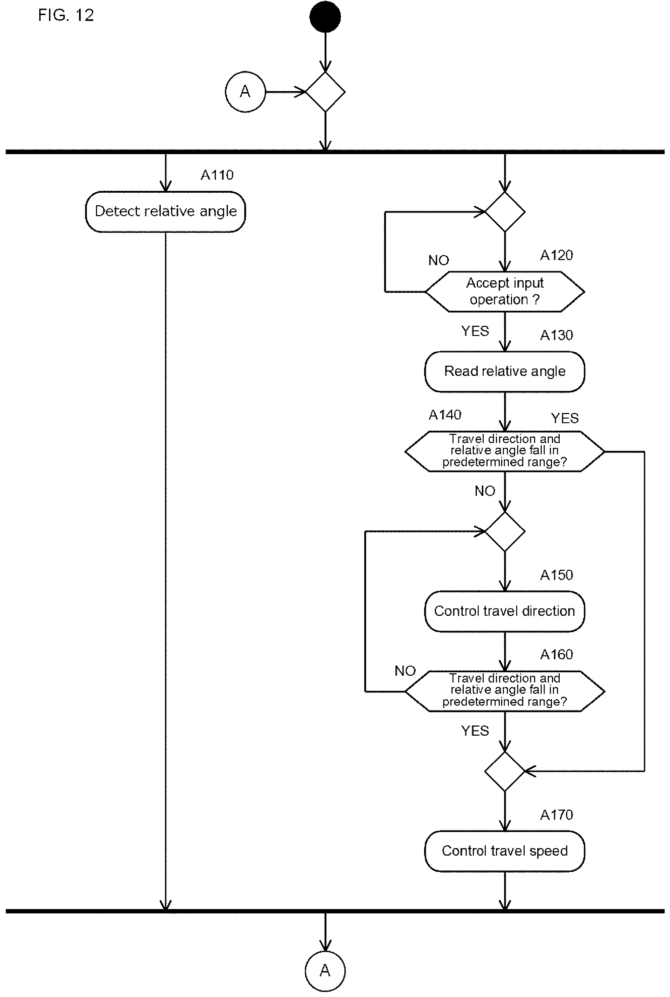

FIG. 12 is an activity diagram showing a flow of controlling the travel of the grass mower 11. The following description follows each activity in this activity diagram. FIG. 12 shows the flow of control during operation of the grass mower 11.

First, the angle sensor 29 continues detecting the relative angle between the main body 2 and the operation rod 32 while the grass mower 11 is operating (Activity A110). Here, the relative angle is, for example, based on the longitudinal direction of the operation rod 32 (0 degrees), and refers to the angle of the main body 2 relative to the operation rod 32. In the present embodiment, the angle of the main body 2 relative to the operation rod 32 is detected based on the front direction (travel direction) of the main body 2. The detection information of the relative angle detected by the angle sensor 29 is transmitted to the operation controller 25 via the wiring harness.

In addition, the controller 5 accepts an input operation for the travel direction of the main body 2 (Activity A120). Here, the travel direction of the main body 2 input by the controller 5 is, for example, based on the front direction (0 degrees) when the controller 5 is viewed from the front (FIG. 11A), and refers to the tilt direction of the operation lever 52d relative to the front direction. Information on the input operation by the controller 5 is transmitted to the first transmitting-receiving unit 26 in the main body 2 via the second transmitting-receiving unit 51. Furthermore, the information on the above-mentioned input operation is transmitted from the first transmitting-receiving unit 26 to the operation controller 25.

Next, the operation controller 25 acquires the relative angle between the main body 2 detected by the angle sensor 29 and the operator holding the operation rod 32 (i.e., the longitudinal direction of the operation rod 32) (Activity A130).

The operation controller 25 then determines the difference between the direction input using the controller 5 (the travel direction of the main body 2) and the relative angle (Activity A140). In the case where it is determined that the difference between the input direction and the relative angle falls within a predetermined range, the operation controller 25 proceeds to processing of Activity A170 (YES in Activity A140). On the other hand, in the case where it is determined that the difference between the input direction and the relative angle is out of a predetermined range, the operation controller 25 proceeds to processing of Activity A150 (NO in Activity A140). Here, the predetermined range is a range that allows not only the case where the direction input using the controller 5 is aligned with the above-mentioned relative angle, but also the case where there is some deviation. Therefore, the predetermined range can be changed as appropriate, in light of the precision of the operation using the controller 5.

Next, the operation controller 25 controls the travel direction of the main body 2 so as to align the travel direction input using the controller 5 with the relative angle between the main body 2 and the operation rod 32 (Activity A150). In other words, the operation controller 25 controls the drive direction and drive speed of the left traveling unit 22a and the right traveling unit 22b, respectively, and controls the drive of the traveling units 22 until the difference between the above-mentioned relative angle detected by the angle sensor 29 and the travel direction input using the controller 5 falls within a predetermined range, thereby causing the main body 2 to rotate clockwise or counterclockwise (NO in Activity A160).

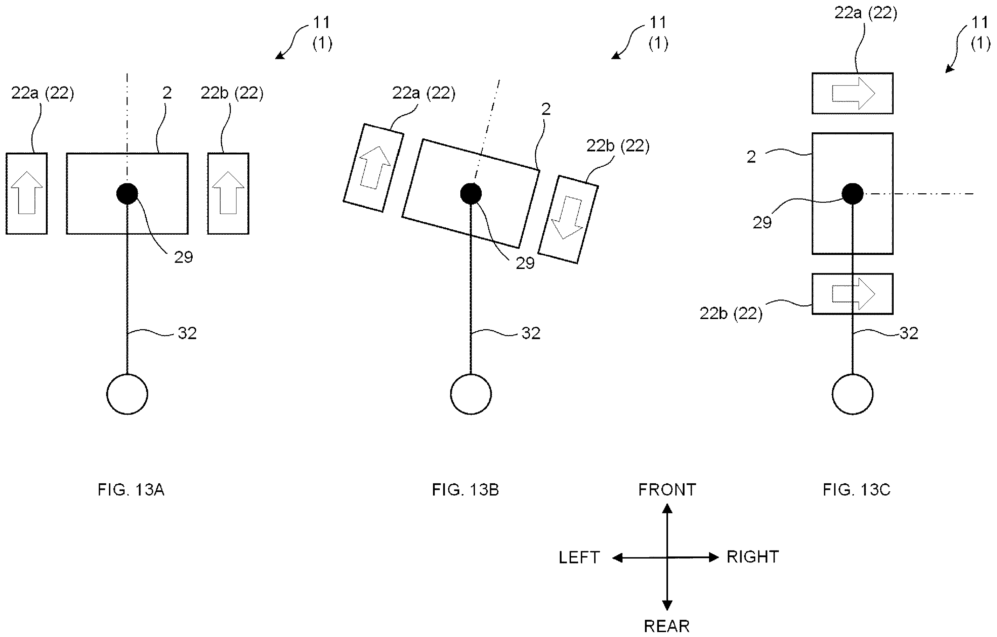

FIG. 13A to FIG. 13C are conceptual diagrams each showing a case of controlling the travel direction of the grass mower 11. In FIG. 13A to FIG. 13C, the operation lever 52d is tilted to the right. In other words, the operation of the operation lever 52d results in a 90 degree tilt to the right based on the front direction when the controller 5 is viewed from the front. First, as shown in FIG. 13A, the main body 2 travels in the front direction, and the input operation of the operation lever 52d causes the right traveling unit 22b to rotate in reverse, thereby rotating the main body 2 clockwise (FIG. 13B). Then, when the main body 2 faces rights, the operation controller 25 returns the right traveling unit 22b to a forward rotation, causing the main body 2 to travel in the right direction (FIG. 13C). In FIG. 13(C), the travel direction of the main body 2 relative to the operation rod 32 is 90 degrees to the right. Thus, the operation controller 25 controls the travel direction of the main body 2 so as to align the travel direction input using the controller 5 with the relative angle between the main body 2 and the operation rod 32.

Returning to the description of FIG. 12. When the difference between the travel direction of the main body 2 and the relative angle detected by the angle sensor 29 falls within a predetermined range (YES in Activity A160), the control of the travel direction is terminated, and the operation controller 25 changes the travel speed of the main body 2 in response to the input operation by the controller 5 (Activity A170). That is, the operation controller 25 changes the travel speed of the main body 2 in response to, for example, the tilt angle of the operation lever 52d, the input time, and the like. According to such an aspect, it is possible to further improve the operability of the working machine.

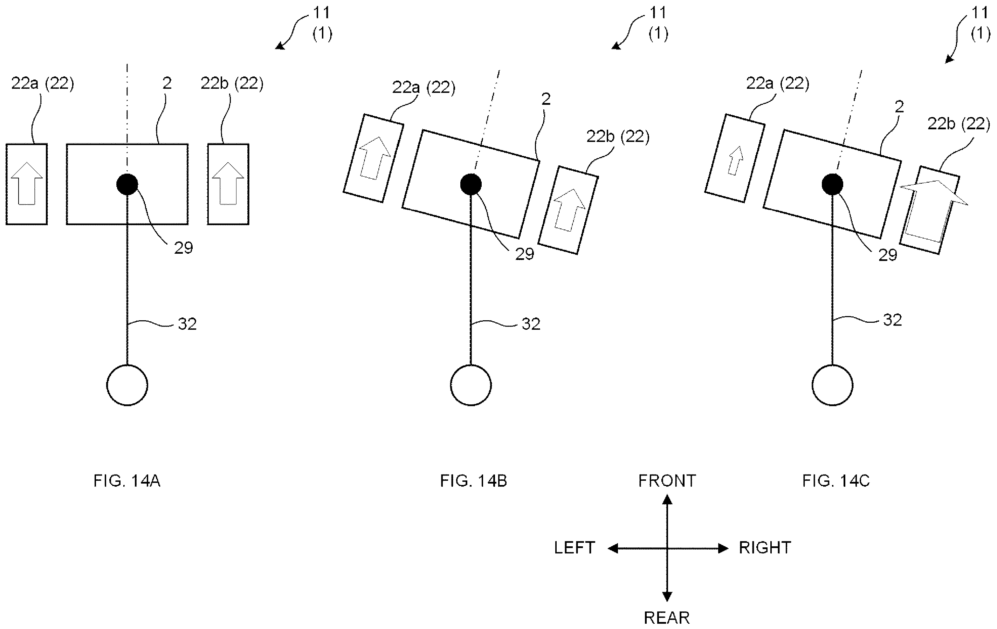

FIG. 14A to FIG. 14C are diagrams for explaining a case in which a deviation occurs in the travel direction of the main body 2 while the grass mower 11 is traveling. Initially, the main body 2 was traveling in the front direction as shown in FIG. 14A, but depending on the work environment, there is a case that a deviation occurs in the travel direction of the main body 2, as shown in FIG. 14B. In this case, as shown in FIG. 14C, if the deviation occurs in the right direction, the drive of the right traveling unit 22b is increased and the drive of the left traveling unit 22a is reduced relatively, thereby gradually transitioning to the state shown in FIG. 14A.

Here, it is preferable for the operation controller 25 to change the control amount of the traveling method of the main body 2 depending on the amount of difference between the input travel direction and the relative angle. For example, in the case where the input travel direction and the above-mentioned relative speed do not differ significantly, the operation controller 25 adjusts the traveling unit 22 slightly, and in the case where the difference becomes large, the operation controller 25 adjusts the traveling unit 22 more significantly. This control method allows the operator to pay less attention to controlling the travel direction of the main body 2, and the travel direction of the main body 2 is naturally corrected. In other words, according to such an aspect, a deviation in the travel direction of the main body 2 can be corrected more naturally.

Each of the above activities is performed while the grass mower 11 is operating.

As described above, the operator does not need to use separate levers for straight travel and turning operations, and can change the travel direction of the grass mower 11 simply by operating the operation lever 52d. In other words, the travel direction of the main body 2 and the travel speed of the main body 2 can be changed with a single operation lever 52d, allowing the operator to intuitively operate the grass mower 11. That is, according to the present embodiment, it is possible to provide a working machine or the like that can be intuitively operated using a controller.

Although the embodiments of the present disclosure have been described above, the present disclosure is not limited thereto and can be modified as appropriate without departing from the technical concept of the present disclosure.

### 3. Variations

Chapter 3 describes variations of the present embodiment. The following variations can be combined as appropriate.

In the present embodiment, a state in which the operation rod 32 is attached to the main body 2 has been described. However, in the case where the operation rod 32 is removed from the main body 2, the operation controller 25 may control the travel direction of the main body 2 without using the relative angle detected by the angle sensor 29. For example, if the grass mower 11 is operated at a position apart from the operator that is greater than or equal to the length of the operation rod 32, and the operation rod 32 remains connected, the operation rod 32 may get caught on an obstacle, which may impede the travel of the grass mower 11. Therefore, it is preferable to remove the operation rod 32 and allow the grass mower 11 to travel, but in this case, there is not necessarily a correlation between the relative angle detected by the angle sensor 29 and the position of the operator. Thus, by adopting such an aspect, it is possible to select whether or not the operation rod 32 is required depending on the work environment.

In the present embodiment, an example has been described in which the travel control by the operation controller 25 is executed without any problems. However, in the case where the operation controller 25 determines that the travel direction of the main body 2 is uncontrollable, the operation controller 25 may stop controlling the travel direction of the main body 2. For example, in the case where the travel direction of the main body 2 cannot be controlled due to a slip of the traveling units 22, it is possible to prevent overload on each component due to this control.

In the present disclosure, the case where the working machine 1 is the grass mower 11 has been described as an example. However, the working machine 1 is not limited thereto. For example, the working machine 1 may be the grass mower 11, a collector (not shown) that collects trash, golf balls or the like that have fallen on the ground, or a spreader (not shown). According to such an aspect, the grass mower, the collector, or the spreader with further improved operability can be used to perform predetermined work of each machine.

In the present disclosure, an example has been shown in which the input unit 52 includes the operation lever 52d and the cutting blade operation lever 52c. However, the present disclosure is not limited thereto. The input unit 52 may further include a travel operation lever 52a and a direction operation lever 52b. The travel operation lever 52a is a means of operation for increasing or decreasing the travel speed of the main body 2. The travel operation lever 52a is configured to control the travel speed of the main body 2 via a drive switch (not shown). The direction operation lever 52b is a means of operation for operating the travel direction of the main body 2. By configuring the input unit 52 to include the travel operation lever 52a and the direction operation lever 52b in addition to the operation lever 52d and the cutting blade operation lever 52c, the operator who is accustomed to the conventional operation method, i.e., the method of operating the grass mower 11 using the travel operation lever 52a and the direction operation lever 52b, can appropriately select the operation lever 52d or the travel operation lever 52a and the direction operation lever 52b depending on the work environment.

### 4. Others

The present disclosure may be provided in each of the following aspects.
(1) A working machine, comprising: a main body including an angle sensor and an operation controller and configured to travel on a basis of rotational power of a motor; and an operation unit connected to the main body and including an operation rod, a gripping portion, and a controller, the operation rod being connected to the main body, the gripping portion being connected to the operation rod and being configured to be gripped to assist the travel of the main body, the controller being arranged in the gripping portion and being configured to accept an input operation for a travel direction of the main body, the angle sensor being configured to detect a relative angle between the main body and the operation rod, and the operation controller being configured to control the travel direction of the main body so as to align the input travel direction with the relative angle.
   According to such an aspect, it is possible to provide a working machine or the like that can be intuitively operated using a controller.
(2) The working machine according to (1), wherein the angle sensor is arranged at a connection portion between the main body and the operation rod.
   According to such an aspect, the relative angle between the main body and the operation rod can be detected more easily.
(3) The working machine according to (2), wherein the connection portion is provided at a center of a turning position of the main body.
   According to such an aspect, there is no need to consider the control amount resulting from an offset in the connection portion, thereby simplifying the control.
(4) The working machine according to any one of (1) to (3), wherein the operation controller is configured to change a control amount of a traveling method of the main body depending on an amount of difference between the input travel direction and the relative angle.
   According to such an aspect, a deviation in the travel direction of the main body can be corrected more naturally.
(5) The working machine according to any one of (1) to (4), wherein the operation controller is configured to change travel speed of the main body in response to the input operation.
   According to such an aspect, it is possible to further improve the operability of the working machine.
(6) The working machine according to any one of (1) to (5), wherein in a case where the operation rod is removed from the main body, the operation controller is configured to control the travel direction of the main body without using the detected relative angle.
   According to such an aspect, it is possible to select whether or not the operation rod is required depending on the work environment.
(7) The working machine according to any one of (1) to (6), wherein in a case where the operation controller determines that the travel direction of the main body is uncontrollable, the operation controller stops controlling the travel direction of the main body.
   According to such an aspect, in the case where the travel direction of the main body cannot be controlled due to a slip, it is possible to prevent overload on each component due to this control.
(8) The working machine according to any one of (1) to (7), wherein the working machine is a grass mower, a collector, or a spreader.
   According to such an aspect, the grass mower, the collector, or the spreader with further improved operability can be used to perform predetermined work of each machine.

Of course, the present disclosure is not limited thereto.

## Claims

1. A working machine, comprising:
a main body including an angle sensor and an operation controller and configured to travel on a basis of rotational power of a motor; and
an operation unit connected to the main body and including an operation rod, a gripping portion, and a controller,
the operation rod being connected to the main body,
the gripping portion being connected to the operation rod and being configured to be gripped to assist the travel of the main body,
the controller being arranged in the gripping portion and being configured to accept an input operation for a travel direction of the main body,
the angle sensor being configured to detect a relative angle between the main body and the operation rod, and
the operation controller being configured to control the travel direction of the main body so as to align the input travel direction with the relative angle.

2. The working machine according to claim 1, wherein
the angle sensor is arranged at a connection portion between the main body and the operation rod.

3. The working machine according to claim 2, wherein
the connection portion is provided at a center of a turning position of the main body.

4. The working machine according to any one of claims 1 to 3, wherein
the operation controller is configured to change a control amount of a traveling method of the main body depending on an amount of difference between the input travel direction and the relative angle.

5. The working machine according to any one of claims 1 to 4, wherein
the operation controller is configured to change travel speed of the main body in response to the input operation.

6. The working machine according to any one of claims 1 to 5, wherein
in a case where the operation rod is removed from the main body, the operation controller is configured to control the travel direction of the main body without using the detected relative angle.

7. The working machine according to any one of claims 1 to 6, wherein
in a case where the operation controller determines that the travel direction of the main body is uncontrollable, the operation controller stops controlling the travel direction of the main body.

8. The working machine according to any one of claims 1 to 7, wherein
the working machine is a grass mower, a collector, or a spreader.
